# Europäisches Patentamt

## European Patent Office

## Office européen des brevets

(11) Veröffentlichungsnummer: **0 154 010**

**B1**

(12) # EUROPÄISCHE PATENTSCHRIFT

(45) Veröffentlichungstag der Patentschrift:
20.07.88

(51) Int. Cl.⁴: **G 01 N 27/90**

(21) Anmeldenummer: **84115069.1**

(22) Anmeldetag: **10.12.84**

(54) Vorrichtung zum Einführen eines an einem Kabel befestigten Messgerätes in ein Rohr.

(30) Priorität: **27.02.84 DE 3407048**

(43) Veröffentlichungstag der Anmeldung:
**11.09.85 Patentblatt 85/37**

(45) Bekanntmachung des Hinweises auf die Patenterteilung:
**20.07.88 Patentblatt 88/29**

(84) Benannte Vertragsstaaten:
**AT BE DE FR GB IT LU NL SE**

(56) Entgegenhaltungen:
EP-A-0 114 139
GB-A-1 453 189

PATENTS ABSTRACTS OF JAPAN, Band 7, Nr. 23 (P-171) 1168 , 29. Januar 1983

(73) Patentinhaber: **INTERATOM Gesellschaft mit beschränkter Haftung, Friedrich- Ebert- Strasse, D-5060 Bergisch Gladbach 1 (DE)**

(72) Erfinder: **Höller, Klaus, Dipl.- Ing., Bensberger Strasse 224 f, D-5064 Forsbach (DE)**

(74) Vertreter: **Mehl, Ernst, Dipl.- Ing., Postfach 22 01 76, D-8000 München 22 (DE)**

**Beschreibung**

Die Vorliegende Erfindung betrifft eine Vorrichtung nach dem Oberbegriff des 1. Anspruchs. Die Überprüfung von Rohren auf ihre Integrität wirft besondere Probleme auf, wenn die Rohre gebündelt und dazu noch gekrümmt sind, wie es beispielsweise bei Wärmetauschern der sogenannten Helix-Bauart der Fall ist. Die Rohre sind dann nicht von außen zugänglich, so daß Prüf- und Meßgeräte, z. B. solche zur Ultraschallprüfung nur vom Inneren des jeweils zu untersuchenden Rohres her eingesetzt werden können, die zudem zur Energieversorgung und zur Datenübertragung mittels eines Kabels mit dem Außenraum verbunden sein müssen. Bekannte Einrichtungen dieser Art, z. B. Schläuche mit denen das Meßgerät an die gewünschte Stelle im Rohr geschoben wird und die sich bei Wärmetauschern mit geradlinigen oder allenfalls U-förmig gebogenen Rohren bewährt haben versagen, wenn die Rohre gewendelt sind und erhebliche Längen aufweisen; bei von der Anmelderin untersuchten Projekten eines Helium-Helium-Wärmetauschers für eine mit einem Hochtemperatur-Kernreaktor betriebene Anlage wird z. B. von Rohrlängen von etwa 80 m ausgegangen

Vorrichtungen, mit denen Inspektionsgeräte an langen Kabeln in Wärmetauscherrohre eingeführt werden, sind z. B aus der GB-A-1 453 189 und der nachveröffentlichten (Veröffentlichungstag 25.07.84) EP-A-0 114 139 bekannt. Zwar werden auch hier auf dem Meßkabel aufgereihte kugelförmige Kolben zur Kabelförderung benutzt, indem sie wechselweise von der einen oder anderen Richtung mit einem unter Druck stehenden Fluid beaufschlagt werden. Dies geschieht innerhalb eines nach außen abgeschlossenen, das zu untersuchende Rohr und einen an dieses anzuflanschenden Behälter umfassenden Raumes, wobei das gesamte Meßkabel und die zu seinem Antrieb erforderlichen Einrichtungen innerhalb dieses Behälters angeordnet und so während des Betriebes nicht für Wartung usw. zugänglich sind. Die für eine genaue Positionierung des Meßgerätes im Rohr erforderliche Messung der Länge des abgelaufenen Kabels läßt sich durch einfache Zählung der Umdrehungen der Kabeltrommel nicht erreichen. In der JP-A-57-175253 wird hierfür eine aufwendige Rückkopplung mit vom Meßgerät selbst, an Unstetigkeiten des Rohres (z. B. Schweißnähte) reflektierten und aufgenommenen Echos vorgenommen.

Aufgabe der Erfindung ist es, Meßgeräte an beliebige Stellen von längeren, insbesondere gekrümmten Rohren zu befördern, wobei die zur Handhabung erforderlichen Einrichtungen während des Betriebes frei zugänglich sein sollen.

Diese Aufgabe wird durch die im kennzeichnenden Teil des 1. Anspruchs angegebenen Mittel gelöst. Durch die Einrichtung von Schleusen, die den unter Druck gesetzten und daher abzuschließenden Bereich im wesentlichen auf das zu untersuchende Rohr selbst beschränken, können Störungen im Kabelverlauf (z. B. Schleifenbildung) oder an dessen Antrieb ohne weiteres behoben werden. Die vorzugsweise Kugelform aufweisenden und zur Verringerung der Reibung an der Rohrinnenwand zweckmäßigerweise aus einem Werkstoff mit einem geringen Reibungsbeiwert (z. B. aus Polytetrafluoräthylen) hergestellten Rotationskörper weisen ein gewisses Untermaß auf (bei einem Rohr 20 x 2 mm, d. h. mit einem lichten Durchmesser von 16 mm, ein Kugeldurchmesser von 14 mm). Hierdurch wird nicht nur die Überwindung von etwa im Rohrinneren vorhandenen Hindernissen (Ablagerungen oder nach innen durchhängende Schweißnähte) ermöglicht; bei entsprechender Dosierung des zur Förderung der Vorrichtung verwendeten Fluids (vorzugsweise Luft) bildet sich auch zwischen den Rotationskörpern und der Rohrinnenwand ein Fluidpolster, auf dem die Körper "schwimmen" und so die Reibung weiter herabgesetzt wird.

Üblicherweise wird ein Kabel auf einer Trommel aufgewickelt bereitgehalten; dies ist auch hier der Fall. Es bedarf einer mechanischen Förderung, um das Kabel von der Trommel bis vor die pneumatische Antriebseinrichtung zu fördern, wobei auch eine Schleuse zu passieren ist, die den Bereich des erhöhten Drucks gegenüber der Umgebung abschließt. Gemäß der im zweiten Anspruch vorgeschlagenen Ausgestaltung der Erfindung wird zur Förderung des Kabels ein Reibradantrieb verwendet; dieser wirkt in erster Linie auf das Kabel, gestattet jedoch den Durchtritt der Rotationskörper, indem eines der beiden Räder entgegen Federkraft aus seiner Normalstellung auslenkbar ist, dadurch den erforderlichen Zwischenraum schaffend.

Da damit zu rechnen ist, daß die Rotationskörper auf dem Kabel in regelmäßigen Abständen angeordnet sind, wird in besonderer Ausgestaltung dieses Erfindungsgedankens vorgeschlagen, zwei Reibradantriebe im Tandem anzuordnen derart, daß jeweils einer derselben in seiner "geschlossenen" Stellung sich befindet, während der jeweils andere zum Durchtritt eines Rotationskörpers "geöffnet" ist.

In weiterer Ausgestaltung der Erfindung wird vorgeschlagen, daß jedes "Öffnen" eines der Reibradantriebe ein Zählwerk betätigt, um so über die in das Rohr eingespeiste Anzahl von Rotationskörpern auf einfache Weise die Position anzuzeigen, die das am Anfang des Kabels angebrachte Meßgerät im Rohr erreicht hat.

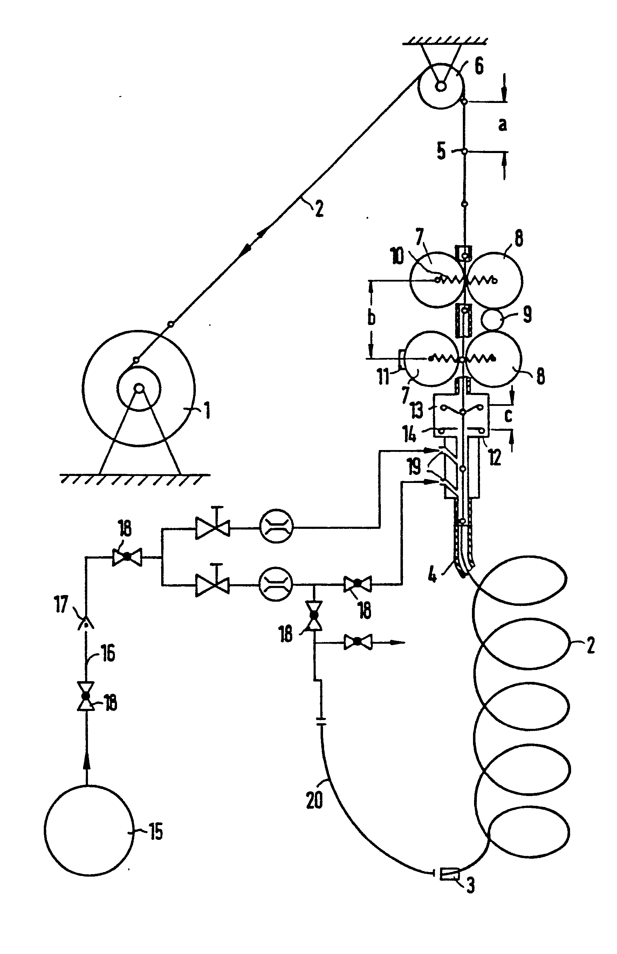

Ein Ausführungsbeispiel der Erfindung ist schematisch in der Zeichnung dargestellt, und zwar zeigt diese eine Trommel 1, von der ein darauf gespeichertes Kabel 2 abwickelbar ist, das neben den eine ausreichende Zugfestigkeit herstellenden Elementen (etwa die Kardeele einer Seilstruktur) auch elektrische Versorgungs- und Datenübertragungsleitungen enthält, mit deren Hilfe die Verbindung zu einem Meß- und Prüfgerät, z. B. einer Wirbelstromsonde 3 hergestellt wird. Mit deren Hilfe soll der Zustand eines gewendelten Rohres 4 untersucht werden (nur teilweise angedeutet), das mit einer Vielzahl seinesgleichen zusammengefaßt z. B. einen Wärmetauscher bildet. Auf seiner gesamten Länge sind auf das Kabel 2 in regelmäßigen Abständen Kugeln 5 aus einem Material aufgereiht, das gegenüber dem Werkstoff des Rohres 4 einen geringen Reibungsbeiwert aufweist. Von der Trommel 1 gelangt das Kabel 2 gegebenenfalls über eine Umlenkrolle 6 in ein Reibradgetriebe, das aus zwei hintereinander angeordneten Radpaaren 7, 8 besteht, von denen jeweils eines 8 durch einen wahlweise in beiden Drehrichtungen wirkenden Antrieb 9 in Drehung versetzt werden kann, wodurch das Kabel 2 in die gewünschte Richtung gefördert wird. Die Räder 7, 8 sind entgegen der Kraft von Federn 10 vom Kabel wegbewegbar, damit der Durchtritt der aufeinanderfolgenden Kugeln 5 ermöglicht wird. Der Abstand a zwischen den einzelnen Kugeln 5 weicht dabei um ein solches Maß von dem Abstand b zwischen den beiden Reibradpaaren ab, daß zu gleicher Zeit jeweils nur eines derselben eine Öffnung für eine Kugel 5 freigeben muß. Durch das Ausweichen eines der Räder (hier 7) wird beim Durchtritt jeder Kugel ein mechanisches oder elektrisches Zählwerk 11 betätigt, von dem die Anzahl der durchgelaufenen Kugeln und damit die Länge des durchgelaufenen Kabels abgelesen werden kann; hiermit kann das Meßgerät 3 an die gewünschte Stelle des Rohres 4 dirigiert werden. Die Förderung des Kabels 2 im Rohr 4 erfolgt pneumatisch nachdem ersteres eine Schleuse 12 passiert hat. Hintereinander angeordnete Schleusen-"Tore" 13, 14 sind federnd so gelagert, daß sie ebenfalls durch Ausweichen den Durchtritt der Kugeln 5 freigeben, dazwischen jedoch verhältnismäßig dicht am Kabel 2 anliegen. Der Abstand c zwischen den Schleusen- "Toren" 13, 14 ist ebenfalls anders als der Abstand a gewählt, damit zu gleicher Zeit nur jeweils eine der Schleusenöffnungen offensteht. Die zur Förderung des Kabels 2 benötigte Druckluft wird z. B. einem Reservoir 15 entnommen, von dem es aus über eine Leitung 16, die mit den erforderlichen Reduzier- 17 und Absperrventilen 18 versehen ist, zu mehreren, (hier zwei) Düsen 19 geführt wird. Soll die Sonde 3 wieder aus dem Rohr 4 entfernt werden, so wird über eine weitere Leitung 20, die an das untere Ende des Rohres 4 führt, in entgegengesetzter Richtung Luft eingeblasen. Da das Kabel 2 jetzt auf Zug beansprucht wird, kann die Bewegung durch die Wirkung der Reibräder 7, 8 unterstützt werden.

## Patentansprüche

1. Vorrichtung zum Einführen eines an einem Kabel (2) befestigten Meßgerätes (3) an eine beliebige Stelle eines Rohres (4) mittels einer Einrichtung (15 bis 20) zum wahlweisen Aufbringen eines Fluiddrucks auf das eine oder das andere Ende des Rohres, wobei auf das Kabel (2) Rotationskörper (5) aufgereiht sind, die gegenüber dem lichten Durchmesser des zu untersuchenden Rohres Untermaß aufweisen, dadurch gekennzeichnet, daß das zu untersuchende Rohr (4) durch eine vom Kabel (2) zu durchlaufende Schleuse (12) abgeschlossen ist.

2. Vorrichtung nach Anspruch 1, dadurch gekennzeichnet, daß das Kabel (2) mit Hilfe eines Reibradantriebes (7-9) in das Rohr (4) hinein- bzw. aus diesem herausförderbar ist.

3. Vorrichtung nach Anspruch 2 mit in regelmäßigen Abständen (a) aufgereihten Rotationskörpern (5), dadurch gekennzeichnet, daß zwei Reibradantriebe (7- 9) hintereinander in einem Abstand (b) angeordnet sind, der von demjenigen der Rotationskörper untereinander (a) um mindestens die Länge eines derselben abweicht.

4. Vorrichtung nach Anspruch 2 oder 3, dadurch gekennzeichnet, daß der Reibradantrieb (7-9) ein Zählwerk (11) aufweist, das beim Durchtritt jeweils eines Rotationskörpers (5) um eine Einheit weiterschaltet.

## Claims

1. Device for inserting a measuring instrument (3) fixed to a cable (2) at an arbitrary point of a pipe (4) by means of an appliance (15 to 20) for selective application of a fluid pressure at one or the other end of the pipe, rotational bodies (5) being lined up on the cable (2), which are undersized compared to the inside diameter of the pipe to be examined, characterised in that the pipe (4) to be examined is sealed by a sluice (12) through which the cable (2) is to pass.

2. Device according to claim 1, characterised in that the cable (2), is able to be transported into and out of the pipe (4) with the aid of a friction drive (7-9).

3. Device according to claim 2 with rotational bodies (5) lined up at regular spacings (a), characterised in that two friction drives (7-9) are arranged behind each other at a spacing (b), which differs from the spacing of each of the bodies of rotation beneath the other (a) by at least the length of one of the same.

4. Device according to claim 2 or 3, characterised in that one friction drive (7-9) has a counter (11) which counts one unit when each one body of rotation (5) passes through.

## Revendications

1. Appareil pour introduire un instrument de mesure (3) attaché à un câble (2) à n'importe quel endroit d'un tube (4), au moyen d'un dispositif (15 à 20), pour appliquer une pression de fluide à volonté sur l'une ou l'autre extrémité du tube, des corps de révolution (5) étant enfilés sur le câble (2) et ayant une dimension inférieure au diamètre intérieur du tube à vérifier, caractérisé en ce que le tube (4) à vérifier est fermé par un sas (12) traversé par le câble (2).

2. Appareil suivant la revendication 1, caractérisé en ce que le câble (2) peut être enfilé et retiré du tube (4) à l'aide d'un dispositif d'entraînement à galets de friction (7 à 9).

3. Appareil suivant la revendication 2 ayant des corps de révolution (5) enfilés à des intervalles (a) réguliers, caractérisé en ce que deux dispositifs d'entraînement à galets de friction (7 à 9) sont disposés l'un derrière l'autre, à un intervalle (b) qui diffère de celui (a) des corps de révolution entre eux, d'au moins la longueur de l'un de ceux-ci.

4. Appareil suivant la revendication 2 ou 3, caractérisé en ce que le dispositif d'entraînement à galets de friction (7 à 9) comporte un compteur (11) qui se décale d'une unité, lors du passage de chaque corps de révolution (5).